# EUROPÄISCHE PATENTSCHRIFT

(11) **EP 1 808 241 B1**
(45) Veröffentlichungstag und Bekanntmachung des Hinweises auf die Patenterteilung: **17.09.2008**
(21) Anmeldenummer: 07000624.2
(22) Anmeldetag: 12.01.2007
(51) Int. Cl.: B22D 25/00, B22D 29/00, B29C 67/20, C04B 38/04

(54) **Verfahren zur Herstellung von offenporigen Bauteilen aus Metall, Kunststoff oder Keramik**
Method for producing open pored construction elements made of metal, plastic or ceramic
Procédé destiné à la fabrication de composants à pores ouverts en métal, plastique ou céramique

(30) Priorität: 16.01.2006 DE 102006002227
(43) Veröffentlichungstag der Anmeldung: 18.07.2007
(73) Patentinhaber: Kurtz GmbH, 97892 Kreuzwertheim (DE); Laempe & Mössner GmbH, 79650 Schopfheim (DE); Kuhs, Bernd, 79541 Lörrach (DE)
(72) Erfinder: Kuhs, Bernd, 79541 Lörrach (DE); Ulrich Munz, 97074 Würzburg (DE); Raimund Strub, 97280 Remlingen (DE)
(74) Vertreter: Böck, Bernhard

(56) Entgegenhaltungen:
- EP-A2- 1 386 896
- US-A- 3 210 166
- MOHR ET AL: "PROCESSING AND FIRST CHARACTERIZATION OF FERROUS FOAMS" PROCEEDINGS OF THE EUROPEAN CONFERENCE ON ADVANCED MATERIALS AND PROCESSES, DGM INFORMATIONSGESELLSCHAFT VERLAG, OBERURSEL, DE, 2000, Seiten 28-33, XP009081715
- GROTE F, BUSSE P: "GIESSTECHNISCHE HERSTEKLLUNG OFFENPORIGER METALLSCHWÄMME MITTELS MINERALISCHER PLATZHALTER" METALLSCHÄUME, 2000, Seiten 415-418, XP002428114

## Beschreibung

Die Erfindung bezieht sich auf ein Verfahren zur Herstellung von offenporigen Bauteilen aus Metall, Kunststoff oder Keramik.

### Stand der Technik

Schon seit langem versucht man, Metalle mit geeigneten Treibmitteln, z.B. Gasen, zu versehen, um diese im flüssigen Zustand aufzuschäumen, wodurch eine geringere Dichte und gleichzeitig eine hohe Festigkeit von daraus hergestellten Bauteilen erlangt werden soll. Diese bekannten Verfahrend haben jedoch den Nachteil, dass die eingebrachten (Gas-) Blasen sehr unkontrolliert entstehen und unterschiedliche, nicht klar definierte Größen erreichen. Außerdem dringen die Blasen bis an die Oberfläche der Bauteile und lassen keine definierte Außenhautdicke entstehen, welche für eine berechenbare, statische Funktion notwendig wäre.

Die US 3210166 offenbart ein Bauteil aus Metallschaum und ein Verfahren zu seiner Herstellung. Gemäß diesem bekannten Verfahren werden Salzkugeln als Platzhalter in eine Form mit einem Binder gepresst und die so verbundenen Kugeln werden in eine dem Bauteil entsprechende Außenform gelegt. Abschließend werden die Salzkugeln mit Wasser ausgespült.

Aufgabe der Erfindung ist es, ein Verfahren aufzuzeigen, das die Herstellung offenporiger Bauteile aus Metall, Kunststoff oder Keramik mit definierter Porengröße, mit einer bei Bedarf definierten Außenhautdicke und mit geringer Dichte ermöglicht.

Dies wird mit einem Verfahren mit den Merkmalen nach Anspruch 1 erreicht. Die Unteransprüche betreffen sinnvolle Fortbildungen der Erfindung.

### Beschreibung der Erfindung

Nach der Erfindung werden zuerst Kugeln 1 in der gewünschten Sporengröße hergestellt. Diese Kugeln 1 können z.B. einen Durchmesser von 5 mm haben und werden hergestellt, indem man z.B. einen geeigneten Gießereisand oder ein Quarzmehl mit einem im Gießereiprozess bekannten Sandbinder versetzt und durch ein geeignetes Formgebungsverfahren, z.B. Granulieren, Pelletieren oder Schießen, zu möglichst gleichmäßigen Kugeln 1 formt.

Die ausgehärteten Kugeln 1 werden wiederum mit einem Bindemittel versehen bzw. beschichtet und dann in die gewünschte Form gegeben. Durch ein dem Bindemittel entsprechendes Härteverfahren, dies kann z.B. eine Behandlung mit heißer Luft, mit Kohlendioxid oder mit einem Amin oder auch lediglich eine Wärmebehandlung durch Mikrowellen sein, werden die Kugeln 1 miteinander verbunden. Vorzugsweise geschieht dieser Vorgang durch Trocknung oder, je nach Art des Bindemittels, durch Durchströmen eines reaktiven Gases, wie beispielsweise ein Amin oder Kohlendioxid, oder durch Härtung mittels Mikrowelle oder durch Lagerung in einem Trockenofen. Es entstehen dabei sogenannte Binderbrücken 2 zwischen den einzelnen Kugeln 1, nur dort wo sich die Kugeln 1 berühren (siehe die anhängende Zeichnung).

Erfindungsgemäß findet das Verfahren. Anwendung bei der Herstellung von Bauteile zum Einsatz in Wärmetauschern, Kühlaggregaten und als Ersatz von Kühlrippen jeglicher Art. Besonders nach oben beschriebenem Verfahren hergestellte Bauteile mit einem gut wärmeleitenden Material, wie z.B. Aluminium- und Kupferlegierungen, eignen sich wegen ihrer guten Luftdurchlässigkeit und großen Oberfläche hervorragend für den Einsatz z.B. in Kühlaggregaten. Hierbei ergibt sich noch ein weiterer konstruktiver Vorteil, wenn erfindungsgemäß Kühlschlangen für den Transport eines Kühlmediums bereits vor dem Abgießen mit dem Metall und bereits vor dem Verfestigen der Kugeln 1 untereinander direkt zwischen den Kugeln 1 platziert werden. Auf diese Weise wird in einem Arbeitsgang die Kühlschlange bzw. werden die Kühl- oder Heizrohre mit dem Metall verschmolzen. Durch diese Möglichkeit der Herstellung müssen nicht, wie sonst bei herkömmlichen Kühlaggregaten oder Wärmetauschern üblich, die Kühl- oder Heizrohre nachträglich durch ein Gerippe geschoben und fixiert werden. Außerdem können viele und wesentlich längere Kühl- oder Heizrohre nach Belieben als Spirale oder als Knäuel in den Kugelhaufen eingelegt werden, woraus sich eine viel bessere Möglichkeit zum Wärmeaustausch ergibt.

Die Bindemittel müssen entweder so gewählt werden, dass sie sich durch die Wärmeeinwirkung eines heißen Metalls, Kunststoffs oder der heißen Keramik zersetzen, oder sie müssen wasserlöslich sein, so dass sie nach dem Abgießen mit einem Metall, einem Kunststoff oder einer keramischen Masse sich wieder aus dem Bauteil entfernen lassen. Hierfür stehen viele unterschiedliche Gießereibindemittel auf organischer oder auch anorganischer Basis zur Verfügung.

Das Kugelgebilde kann nun wiederum in eine Form, z.B. eine Kokille, gegeben werden. Über den Abstand zwischen dem Kugelgebilde und der Kokillenwand lässt sich die spätere Dicke der Außenhaut eines Bauteils bestimmen. Durch ein geeignetes Gießverfahren werden dann die Hohlräume 3 zwischen den Kugeln 1 sowie der Zwischenraum 4, der sich zwischen dem Kugelgebilde und der Außenform, z.B. der Kokille, gebildet hat, mit dem Metall bzw. Kunststoff oder einer keramischen Masse gefüllt. Vorzugsweise wird bei einer Befüllung mit Metall das gesamte Kugelgebilde vorher in einem Ofen erhitzt, um die Fließfähigkeit des Metalls bis in alle feinen Zwischenräume zu gewährleisten. Bei Metallen bietet sich beispielsweise eine übliche Niederdruck-Gießtechnik an. Um ein Penetrieren des Füllmediums in das Innere der Kugeln 1 zu verhindern, können diese auch vorher mit einem geeigneten Mittel imprägniert werden.

Nach dem Erhärten der Metallschmelze, des Kunststoffes oder der keramischen Masse kann dann sämtliches Kugelmaterial durch Vibration oder durch Ausschwemmen mit Wasser aus dem Bauteil entfernt werden. Dazu wird mindestens eine Seite des Bauteils ohne Außenhaut erzeugt, oder es wird nachträglich die Außenhaut an geeigneter Stelle wieder geöffnet, z.B. aufgebohrt, so dass sich sämtliches Kugelmaterial völlig rückstandslos entfernen lässt, da sämtliche über die Binderbrücken 2 zwischen den Kugeln 1 entstandenen Hohlräume miteinander in Verbindung stehen. Je größer man vorher die Binderbrücken 2 ausgebildet hat, d.h. je mehr Bindemittel man für die Verbindung der Kugeln 1 vorher eingesetzt hat, desto größer sind hinterher die Durchgänge zwischen den sphärischen Hohlräumen.

Hierdurch können nun auch große Bauteile mit definierter Formgebung, mit einer klar definierten Porengröße und genau definierter Außenhautdicke hergestellt werden, was mit bisher beschriebenen Verfahren nicht möglich war.

Eine besondere Ausführung der Erfindung besteht darin, dass der Metallschmelze, dem Kunststoff oder der keramischen Masse Fasern beigemischt werden, welche sich dann in den Kugelzwischenräumen beim Füllvorgang zwangsweise entlang der durch die Zwischenräume zwischen den Kugeln 1 gebildeten Kanäle ausrichten und somit noch eine wesentliche Steigerung der Festigkeit bewirken können. Dieses können beispielsweise Kohle-, Glas-, Mineral- oder Kunstfasern sein, welche in der Länge so gewählt sein müssen, dass sie sich in den Zwischenräumen zwischen den Kugeln 1 ausrichten können. So hergestellte Bauteile können überall Verwendung finden, wo leichte Bauteile dennoch eine sehr hohe Stabilität und Festigkeit aufweisen müssen. Dies ist besonders im Fahrzeug- und Flugzeugbau und in der Raumfahrt der Fall. Aber auch Anwendungen im Bauwesen, im Maschinenbau und in der Möbelindustrie sind denkbar.

Eine besondere Herstellungsvariante besteht darin, dass oben bezeichnete Kugeln 1 in eine Form gebracht und über ausgehärtete Binderbrücken 2 verbunden werden und die Hohlräume 3 dann anschließend nicht vollständig mit einem wärmeleitenden Material, vorzugsweise einer Aluminiumlegierung, gefüllt werden, sondern das Kugelgebilde und dessen Hohlräume 3 nur benetzt werden. Dadurch ergeben sich nach dem Entfernen des Kugelmaterials räumlich zwei voneinander getrennte durchgängige Hohlräume, ein durchgängiger Hohlraum für das Kühl- oder Heizmedium und ein davon getrennter, ineinander verschachtelter, zweiter durchgängiger Hohlraum für das zu kühlende oder zu heizende Medium. Für die Herstellung eines derartigen Wärmetauschers ist es nicht erforderlich, irgendwelche Kühl- oder Heizrohre zu installieren. Die Kugeln 1 werden in diesem Fall vorzugsweise aus einem feinen Quarzmehl und aus einem hitzebeständigen Bindemittel hergestellt; vorzugsweise verwendet man als Bindemittel sowohl für die Herstellung als auch für die Verbindung der Kugeln 1 untereinander ein anorganisches Material, wie bei Gießereisandbindern bekannt, z.B. ein Silikat, Magnesiumsulfat und/oder ein Phospat. Das verfestigte Kugelgebilde sollte dann mindestens auf die gleiche Temperatur gebracht werden wie das einzufüllende Metall. Hierdurch wird gewährleistet, dass nach einer zuerst vollständigen Füllung der Hohlräume 3 das Metall noch nicht erstarrt ist und das überschüssige Metall aus den Hohlräumen 3 wieder abfließen kann. Es werden dadurch praktisch alle Oberflächen mit Metall überzogen, und es ergibt sich doch wieder ein durchgehender Hohlraum zwischen den Kugeln 1 nach dem Abfließen des Metalls. Nach dem Erstarren des Metalls wird nun das gesamte Kugelformmaterial herausgewaschen, wodurch der zweite, durchgängige Hohlraum freigegeben wird, welcher vollständig getrennt ist von dem zuerst erzeugten. Anschlüsse für beide Hohlräume oder Kammern können bei der Formgebung mit berücksichtigt werden und beim Gießvorgang gleich mit vergossen werden. Sollten sich Undichtigkeiten zwischen den beiden Hohlräumen oder Kammern ergeben, so könnten diese durch das Einbringen beispielsweise eines Siegellackes in eine(n) oder auch in beide Hohlräume oder Kammern verschlossen werden.

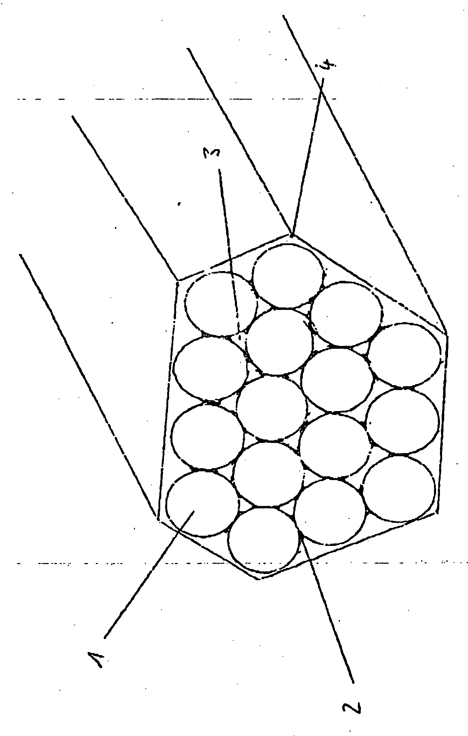

## Patentansprüche

1. Verfahren zur Herstellung von leichten Bauteilen aus Metall, Metalllegierungen, Kunststoff oder Keramik unterschiedlicher Geometrien, zum Einsatz in Wärmetauschern oder Kühlaggregaten, wobei ein feines Trägermaterial, vorzugsweise Quarzsand oder Quarzmehl, mit Hilfe eines Bindemittels nach einem formgebenden Verfahren, vorzugsweise durch Granulieren, Pelletieren oder eine anderes formgebendes Verfahren, zu möglichst gleichmäßigen Kugeln (1) geformt wird, wobei die vorgefertigten Kugeln (1) mit dem gleichen oder auch einem anderen bindenden Medium benetzt oder beschichtet und so in die gewünschte äußere Form gegeben werden und durch ein Härteverfahren an den Berührungsstellen zum Verkleben und/oder zur Bildung von Binderbrücken (2) gebracht werden, wobei die miteinander über Binderbrücken (2) oder durch Verschmelzung verbundenen Kugeln (1) aus ihrer Form entnommen und in die gewünschte Außenform oder Kokille eingelegt werden, wobei danach die Hohlräume (3) zwischen den Kugeln (1) durch die in Gießereiprozessen bekannten Verfahren, vorzugsweise ein Niederdruckverfahren, mit flüssigem Metall oder einer Metalllegierung oder flüssigem Kunststoff oder einer keramischen Masse gefüllt werden und nach dem Erstarren des Metalls oder der Masse das gesamte Kugelmaterial durch Vibration und/oder durch Spülen mit Wasser aus dem erstarrten Metall oder der erstarrten Masse entfernt und/oder herausgewaschen wird,
**dadurch gekennzeichet,**
dass Kühl- oder Heizschlangen direkt in die Kugelschüttung eingebracht werden, bevor die Kugeln (1) durch Härteprozesse miteinander verbunden werden.

2. Verfahren nach Anspruch 1,
**dadurch gekennzeichnet,**
**dass** die Kugelbildung durch die Zugabe von Wasser zum Trägermaterial erfolgt.

3. Verfahren nach Anspruch 1,
**dadurch gekennzeichnet,**
**dass** das Bindemittel organischer Natur, vorzugsweise ein durch Amingas härtendes Harz ist.

4. Verfahren nach Anspruch 1,
**dadurch gekennzeichnet,**
**dass** das Bindemittel ein wasserlösliches, anorganisches Bindemittel auf der Basis von Magnesiumsulfat, Phosphat oder Silikat oder einer Mischung aus diesen ist.

5. Verfahren nach Anspruch 1,
**dadurch gekennzeichnet,**
**dass** das Hohlraum ausfüllende Material ein Kunstharz, beispielsweise ein Polyurethan, Epoxid, Polyester, Acrylat, oder auch ein Thermoplast ist, welches durch Abkühlung und/oder über eine Reaktion mit einem entsprechenden Härter aushärtbar ist.

6. Verfahren nach Anspruch 1,
**dadurch gekennzeichnet,**
**dass** die Verfüllung der Hohlräume (3) mit Hilfe einer an sich bekannten Spritzgussmaschine und mit relativ hohem Druck erfolgt.

7. Verfahren nach Anspruch 1,
**dadurch gekennzeichnet,**
**dass** das Hohlraum ausfüllende Material aus einer keramischen Masse oder einem sonst für die Erzeugung von hochwertigen Keramiken verwendeten keramischen Schlicker besteht, welcher durch Trocknung und/oder durch Reaktion mit einem entsprechenden Härter und/oder durch Brennen in einem Brennofen aushärtbar ist.

8. Verfahren nach Anspruch 7,
**dadurch gekennzeichnet,**
**dass** die entstandenen Teile nach dem Entfernen des Kugelmaterials nachträglich nochmals bei höherer Temperatur nachgebrannt werden.

9. Verfahren nach Anspruch 1,
**dadurch gekennzeichnet,**
**dass** das zur Herstellung der Kugeln (1) verwendete Material ein Quarzmehl ist.

10. Verfahren nach Anspruch 1,
**dadurch gekennzeichnet,**
**dass** das zur Herstellung der Kugeln (1) verwendete Material ein anorganisches Mehl oder Sand ist oder aus Mischungen aus beispielsweise Quarz, Feldspat, Aluminiumoxid, Schamotte, Olivin, Chromerz, Tone, Kaoline, Flussspat, Silikate, Bentonite usw. oder auch aus diesen Einzelsubstanzen besteht.

11. Verfahren nach Anspruch 1,
**dadurch gekennzeichnet,**
**dass** das zur Herstellung der Kugeln (1) verwendete Material ein Salz, wie beispielsweise NaCl, KC1, K₂SO₄, Mg₂SO₄, ist.

12. Verfahren nach Anspruch 1,
**dadurch gekennzeichnet,**
**dass** das zur Herstellung der Kugeln (1) verwendete Material ein Mctallpulver ist.

13. Verfahren nach Anspruch 1
**dadurch gekennzeichnet,**
**dass** das zur Herstellung der Kugeln (1) verwendete Material ein organisches Material, beispielsweise ein wasserlösliches Polyvenylacetat oder ein PVP oder ein Acrylat oder ein Kunststoffgranulat oder ein Mehl aus beispielsweise Polyethylen, Polypropylen, Teflonpulver usw. ist.

14. Verfahren nach Anspruch 1,
**dadurch gekennzeichnet,**
**dass** das zur Herstellung der Kugeln (1) verwendete Bindemittel und/oder das für die Verbindung der Kugeln (1) untereinander verwendete Bindemittel lediglich aus Wasser besteht.

15. Verfahren nach Anspruch 1,
**dadurch gekennzeichnet,**
**dass** das zur Herstellung der Kugeln (1) verwendete Bindemittel und/oder das für die Verbindung der Kugeln(1) untereinander verwendete Bindemittel aus Wasser und einem im Wasser gelösten Salz besteht.

16. Verfahren nach Anspruch 1,
**dadurch gekennzeichnet,**
**dass** das zur Herstellung der Kugeln (1) verwendete Bindemittel und/oder das für die Verbindung der Kugeln (1) untereinander verwendete Bindemittel aus Magnesiumsulfat besteht.

17. Verfahren nach Anspruch 1,
**dadurch gekennzeichnet,**
**dass** das zur Herstellung der Kugeln (1) verwendete Bindemittel und/oder das für die Verbindung der Kugeln (1) untereinander verwendete Bindemittel aus einem Silikat, vorzugsweise Na-Silikat, besteht.

18. Verfahren nach Anspruch 1,
**dadurch gekennzeichnet,**
**dass** das zur Herstellung der Kugeln (1) verwendete Bindemittel und/oder das für die Verbindung der Kugeln (1) untereinander verwendete Bindemittel aus einem Phosphat besteht.

19. Verfahren nach Anspruch 1,
**dadurch gekennzeichnet,**
**dass** das zur Herstellung der Kugeln (1) verwendete Bindemittel und/oder das für die Verbindung der Kugeln (1) untereinander verwendete Bindemittel aus einem im Gießereiprozess üblicherweise für die Herstellung von Formen und Kernen verwendeten Bindemittel besteht.

20. Verfahren nach Anspruch 1,
**dadurch gekennzeichnet,**
**dass** die Kugeln (1) einen Durchmesser von 0,2 mm bis 30 cm aufweisen.

21. Verfahren nach Anspruch 1,
**dadurch gekennzeichnet,**
**dass** die Kugeln (1) einen Durchmesser von vorzugsweise 4-8 mm aufweisen.

22. Verfahren nach Anspruch 1,
**dadurch gekennzeichnet,**
**dass** die Kugeln (1) nach einem für die Formgebung bekannten Verfahren hergestellt werden.

23. Verfahren nach Anspruch 1,
**dadurch gekennzeichnet,**
**dass** die Kugeln (1) durch ein Granulierverfahren, vorzugsweise auf einem Pelletierteller oder einem Sprühgranulator, hergestellt werden.

24. Verfahren nach Anspruch 1,
**dadurch gekennzeichnet,**
**dass** die Kugeln (1) durch das Einbringen des Formstoffes in zwei Halbschalen und durch Pressen oder durch Einschießen mit Druckluft erzeugt werden.

25. Verfahren nach Anspruch 1,
**dadurch gekennzeichnet,**
**dass** die Kugeln (1), bevor der Hohlraum (3) zwischen den Kugeln (1) mit einem Metall oder einer Metalllegierung gefüllt wird, erhitzt werden.

26. Verfahren nach Anspruch 1,
**dadurch gekennzeichnet,**
**dass** die Kugeln (1), bevor der Hohlraum (3) zwischen den Kugeln (1) mit einer Aluminiumlegierung gefüllt wird, bis zu 800°C erhitzt werden.

27. Verfahren nach Anspruch 1,
**dadurch gekennzeichnet,**
**dass** die Kugeln (1), bevor der Hohlraum (3) zwischen den Kugeln (1) mit einer Eisengusslegierung gefüllt wird, bis zu 1.600°C erhitzt werden.

28. Verfahren nach Anspruch 1,
**dadurch gekennzeichnet,**
**dass** die Kugeln (1) mit einem flüssigen Metall oder einem Kunststoff oder einem keramischen Schlicker nur benetzt werden und das überschüssige Material aus den Hohlräumen (3) wieder entfernt wird.

29. Verfahren nach Anspruch 1,
**dadurch gekennzeichnet,**
**dass** sich nach dem Entfernen des Kugelmaterials zwei getrennte, durchgehende Hohlräume bilden.

30. Verfahren nach Anspruch 1 oder 29,
**dadurch gekennzeichnet**
**dass** für die Hohlräume benötigte Anschlussstutzen durch die Formgebung bereits berücksichtigt werden und bei der Hohlraumfüllung gleich mit vergossen werden.

31. Verfahren nach Anspruch 29,
**dadurch gekennzeichnet,**
**dass** eventuelle Undichtigkeiten zwischen den beiden durchgehenden Hohlräumen oder Kammern mit einem Siegelmedium verschlossen werden.

32. Verfahren nach Anspruch 1
**dadurch gekennzeichnet,**
**dass** das flüssige Metall, die flüssige Metalllegierung, der flüssige Kunststoff oder die keramische Masse Fasern enthalten, deren Länge so gewählt ist, dass sie sich beim Füllvorgang in den Kugelzwischenräumen (3) entlang der durch die Zwischenräume (3) gebildeten Kanäle ausrichten.

33. Verfahren nach Anspruch 32,
**dadurch gekennzeichnet,**
**dass** die Fasern eine Länge von 3 bis 4 mm haben.

34. Verfahren nach Anspruch 32,
**dadurch gekennzeichnet,**
**dass** die Fasern Kohle-, Glas-, Mineral- oder Kunstfasern sind.

## Claims

1. A method for producing light components made of metal, metal alloys, plastic, or ceramic of various geometries for use in heat exchangers or cooling assemblies, wherein a fine carrier material, preferably quartz sand or quartz flour, is shaped into balls (1) which are as uniform as possible with the aid of a binder according to a shaping method, preferably by granulation, pelleting, or another shaping method, wherein the prefinished balls (1) are wetted or coated with the same or also a different binding medium and placed in this way in the desired, external mould and caused to stick and/or to form binder bridges (2) at the contact points by a curing method, wherein the balls (1), which are connected to one another via binder bridges (2) or by fusing, are removed from their mould and placed in the desired external mould or permanent mould, wherein subsequently the cavities (3) between the balls (1) are filled, by the methods known in foundry processes, preferably a low-pressure method, with liquid metal or a metal alloy or liquid plastic or a ceramic compound, and after the solidification of the metal or the compound, all of the ball material is removed and/or washed out of the solidified metal or the solidified compound by vibration and/or by washing with water,
**characterized in that**
cooling or heating coils are introduced directly into the ball formation, before the balls (1) are bonded to one another by curing processes.

2. The method according to Claim 1,
**characterized in that**
the balls are formed by adding water to the carrier material.

3. The method according to Claim 1,
**characterized in that**
the binder is of an organic nature, preferably a resin which cures due to amine gas.

4. The method according to Claim 1,
**characterized in that**
the binder is a water-soluble, inorganic binder based on magnesium sulfate, phosphate, or silicate or a mixture thereof.

5. The method according to Claim 1,
**characterized in that**
the material filling up the cavity is an artificial resin, such as a polyurethane, epoxide, polyester, acrylate, or also a thermoplastic, which may be cured by cooling and/or via a reaction with a corresponding curing agent.

6. The method according to Claim 1,
**characterized in that**
the filling of the cavities (3) is performed with the aid of an injection moulding machine known per se and at relatively high pressure.

7. The method according to Claim 1,
**characterized in that**
the material filling up the cavity comprises a ceramic compound or a ceramic slip otherwise used for producing high-quality ceramics, which may be cured by drying and/or by reaction with a corresponding curing agent and/or by firing in a kiln.

8. The method according to Claim 7,
**characterized in that**
the resulting parts are subsequently fired once again at higher temperature after the removal of the ball material.

9. The method according to Claim 1,
**characterized in that**
the material used for producing the balls (1) is a quartz flour.

10. The method according to Claim 1,
**characterized in that**
the material used for producing the balls (1) is an inorganic flour or sand or comprises mixtures of, for example, quartz, feldspar, aluminum oxide, chamottes, olivine, chromium ore, clays, kaolins, fluorite, silicates, bentonites, etc., or also these individual substances.

11. The method according to Claim 1,
**characterized in that**
the material used for producing the balls (1) is a salt, such as NaCl, KCl, K₂SO₄, Mg₂SO₄.

12. The method according to Claim 1.
**characterized in that**
the material used for producing the balls (1) is a metal powder.

13. The method according to Claim 1,
**characterized in that**
the material used for producing the balls (1) is an organic material, such as a water-soluble polyvinyl acetate or a PVP or an acrylate or a plastic granulate or a flour made of, for example, polyethylene, polypropylene, Teflon powder, etc.

14. The method according to claim 1,
**characterized in that**
the binder used for producing the balls (1) and/or the binder used for binding the balls (1) to one another solely comprises water.

15. The method according to Claim 1,
**characterized in that**
the binder used for producing the balls (1) and/or the binder used for binding the balls (1) to one another comprises water and a salt dissolved in water.

16. The method according to Claim 1,
**characterized in that**
the binder used for producing the balls (1) and/or the binder used for binding the balls (1) to one another comprises magnesium sulfate.

17. The method according to Claim 1,
**characterized in that**
the binder used for producing the balls (1) and/or the binder used for binding the balls (1) to one another comprises a silicate, preferably sodium silicate.

18. The method according to Claim 1,
**characterized in that**
the binder used for producing the balls (1) and/or the binder used for binding the balls (1) to one another comprises a phosphate.

19. The method according to Claim 1,
**characterized in that**
the binder used for producing the balls (1) and/or the binder used for binding the balls (1) to one another comprises a binder typically used in foundry processes for producing moulds and cores.

20. The method according to Claim 1,
**characterized in that**
the balls (1) have diameters of 0.2 mm to 30 cm.

21. The method according to Claim 1,
**characterized in that**
the balls (1) have diameters preferably of 4-8 mm.

22. The method according to Claim 1,
**characterized in that**
the balls (1) are produced according to a method known for shaping.

23. The method according to Claim 1,
**characterized in that**
the balls (1) are produced by a granulation method, preferably on a pelleting disk or a spray granulator.

24. The method according to Claim 1,
**characterized in that**
the balls (1) are produced by introducing the moulding material into two half shells and by compression or by shooting in using compressed air.

25. The method according to Claim 1,
**characterized in that**
the balls (1) are heated before the cavity (3) between the balls (1) is filled with a metal or a metal alloy.

26. The method according to Claim 1,
**characterized in that**
the balls (1) are heated up to 800°C before the cavity (3) between the balls (1) is filled with an aluminum alloy.

27. The method according to Claim 1,
**characterized in that**
the balls (1) are heated up to 1,600°C before the cavity (3) between the balls (1) is filled with a cast-iron alloy.

28. The method according to Claim 1,
**characterized in that**
the balls (1) are only wetted using a liquid metal or a plastic or a ceramic slip and the excess material is removed from the cavities (3) again.

29. The method according to Claim 1,
**characterized in that**
two separate, continuous cavities are formed after the removal of the ball material.

30. The method according to Claim 1 or 29,
**characterized in that**
connecting pieces required for the cavities are already taken into consideration during the shaping and are cast at the same time as the cavities are filled.

31. The method according to Claim 29,
**characterized in that**
possible leaks between the two continuous cavities or chambers are closed using a sealing medium.

32. The method according to Claim 1,
**characterized in that**
the liquid metal, the liquid metal alloy, the liquid plastic, or the ceramic compound contain fibres, whose length is selected in such a way that they orient themselves along the channels in the ball intermediate spaces (3) formed by the intermediate spaces (3) during the filling procedure.

33. The method according to Claim 32,
**characterized in that**
the fibres have a length of 3 to 4 mm.

34. The method according to Claim 32,
**characterized in that**
the fibres are carbon, glass, mineral, or artificial fibres.

## Revendications

1. Procédé de fabrication d'éléments constitutifs légers en métal, en alliage de métaux, en matière plastique ou en céramique de différentes géométries, destinés à l'utilisation dans des échangeurs thermiques ou des groupes frigorifiques, une matière support fine, de préférence du sable de quartz ou de la poudre de quartz, étant façonnée à l'aide d'un agent liant par un procédé de façonnage, de préférence par granulation, par agglomération en boulettes ou par un autre procédé de façonnage, en des sphères (1) les plus régulières possible, les sphères (1) préfabriquées (1) étant humectées ou revêtues avec le même ou également avec un autre fluide liant (2) et étant amenées ainsi dans le moule extérieur souhaité et par un procédé de durcissage sur les zones de contact étant amenées à coller et/ou à former des points de jonction intergranulaires (2), les sphères (1) assemblées entre elles par des points de jonction intergranulaires (2) ou par fusion étant prélevées dans leur moule et insérées dans le moule extérieur ou dans la lingotière souhaité(e), les cavités creuses (3) entre les sphères (1) étant remplies par des procédés connus dans les processus de fonderie, de préférence un procédé à basse pression avec un métal liquide ou un alliage de métaux ou de la matière plastique liquide ou une masse céramique, et après solidification du métal ou de la masse, l'ensemble de la matière des sphères étant retiré et/ou éliminé par lavage du métal solidifié ou de la masse solidifiée par vibration et/ou par rinçage à l'eau,
**caractérisé en ce que**
des serpentins de refroidissement ou des serpentins réchauffeurs sont introduits directement dans le versement des sphères, avant que les sphères (1) ne soient assemblées entre elles par des processus de durcissage.

2. Procédé selon la revendication 1,
**caractérisé en ce que**
la formation des sphères est assurée par addition d'eau à la matière support.

3. Procédé selon la revendication 1
**caractérisé en ce que**
l'agent liant est de nature organique, de préférence une résine durcissant par gaz amine.

4. Procédé selon la revendication 1,
**caractérisé en ce que**
l'agent liant est un agent liant anorganique hydrosoluble sur la base de sulfate de magnésium, de phosphate ou de silicate ou d'un mélange de ces derniers.

5. Procédé selon la revendication 1,
**caractérisé en ce que**
la matière remplissant la cavité creuse est une résine synthétique, par exemple un polyuréthane, un époxyde, un polyester, un acrylate ou également une matière thermoplastique susceptible de durcir par refroidissement et/ou via une réaction avec un durcisseur correspondant.

6. Procédé selon la revendication 1,
**caractérisé en ce que**
le remplissage des cavités creuses (3) s'effectue au moyen d'une machine de moulage par injection connue en soi et à une pression relativement élevée.

7. Procédé selon la revendication 1,
**caractérisé en ce que**
la matière remplissant la cavité creuse consiste dans une masse céramique ou dans une barbotine céramique utilisée par ailleurs pour la création de céramiques de haute qualité, qui est susceptible de durcir par séchage et/ou par réaction avec un durcisseur correspondant et/ou par cuisson dans un fourneau.

8. Procédé selon la revendication 7,
**caractérisé en ce que**,
après retrait de la matière des sphères, les pièces obtenues sont encore une fois recuites ultérieurement à température élevée.

9. Procédé selon la revendication 1,
**caractérisé en ce que**
la matière utilisée pour la fabrication des sphères (1) est de la poudre de quartz.

10. Procédé selon la revendication 1,
**caractérisé en ce que**
la matière utilisée pour la fabrication des sphères (1) est une poudre ou un sable anorganique, ou consiste dans des mélanges de par exemple du quartz, du feldspath, de l'oxyde d'aluminium, de la chamotte, de l'olivine, du minerai de chrome, des argiles, des kaolins, de la fluorine, des silicates, des bentonites etc. ou également dans ces substances individuelles.

11. Procédé selon la revendication 1,
**caractérisé en ce que**,
la matière utilisée pour la fabrication des sphères (1) est un sel, comme par exemple le NaCl, le KCl, le K₂SO₄ le Mg₂SO₄.

12. Procédé selon la revendication 1,
**caractérisé en ce que**
la matière utilisée pour la fabrication des sphères (1) est une poudre métallique.

13. Procédé selon la revendication 1,
**caractérisé en ce que**
la matière utilisée pour la fabrication des sphères (1) est une matière organique, par exemple un acétate de polyvinyle hydrosoluble ou un PVP ou un acrylate ou un granulé de matière plastique ou une poudre, par exemple de polyéthylène, de polypropylène, une poudre de téflon, etc.

14. Procédé selon la revendication 1,
**caractérisé en ce que**
l'agent liant utilisé pour la fabrication des sphères (1) et/ou l'agent liant utilisé pour l'assemblage des sphères (1) entre elles consiste uniquement dans de l'eau.

15. Procédé selon la revendication 1,
**caractérisé en ce que**,
l'agent liant utilisé pour la fabrication des sphères (1) et/ou l'agent liant utilisé pour l'assemblage des sphères (1) entre elles consiste dans de l'eau et dans une sel dissous dans l'eau.

16. Procédé selon la revendication 1,
**caractérisé en ce que**
l'agent liant utilisé pour la fabrication des sphères (1) et/ou l'agent liant utilisé pour l'assemblage des sphères (1) entre elles consiste dans du sulfate de magnésium.

17. Procédé selon la revendication 1,
**caractérisé en ce que**
l'agent liant utilisé pour la fabrication des sphères (1) et/ou l'agent liant utilisé pour l'assemblage des sphères (1) entre elles consiste dans un silicate, de préférence dans un silicate de Na.

18. Procédé selon la revendication 1,
**caractérisé en ce que**
l'agent liant utilisé pour la fabrication des sphères (1) et/ou l'agent liant utilisé pour l'assemblage des sphères (1) entre elles consiste dans un phosphate.

19. Procédé selon la revendication 1,
**caractérisé en ce que**
l'agent liant utilisé pour la fabrication des sphères (1) et/ou l'agent liant utilisé pour l'assemblage des sphères (1) entre elles consiste dans un agent liant utilisé usuellement dans le processus de fonderie pour la fabrication de moules et de noyaux.

20. Procédé selon la revendication 1,
**caractérisé en ce que**
les sphères (1) présentent un diamètre de 0,2 mm à 30 cm.

21. Procédé selon la revendication 1,
**caractérisé en ce que**
les sphères (1) présentent de préférence un diamètre de 4 à 8 mm.

22. Procédé selon la revendication 1,
**caractérisé en ce que**
les sphères (1) sont fabriquées selon un procédé connu pour le façonnage.

23. Procédé selon la revendication 1,
**caractérisé en ce que**
les sphères (1) sont fabriquées par un procédé de granulation, de préférence sur une assiette à granuler ou sur un granulateur à vaporisation.

24. Procédé selon la revendication 1,
**caractérisé en ce que**
les sphères (1) sont créées par l'introduction de la matière à mouler dans deux demi-coques et par pressage ou par insertion avec de l'air comprimé.

25. Procédé selon la revendication 1,
**caractérisé en ce que**,
avant que la cavité creuse (3) entre les sphères (1) est remplie d'un métal ou d'un alliage métallique, les sphères (1) sont chauffées.

26. Procédé selon la revendication 1,
**caractérisé en ce que**,
avant que la cavité creuse (3) entre les sphères (1) est remplie d'un alliage d'aluminium, les sphères (1) sont chauffées jusqu'à 800°C.

27. Procédé selon la revendication 1,
**caractérisé en ce que**,
avant que la cavité creuse (3) entre les sphères (1) est remplie d'un alliage de fonte de moulage, les sphères (1) sont chauffées jusqu'à 1.600°C.

28. Procédé selon la revendication 1,
**caractérisé en ce que**
les sphères (1) sont uniquement humidifiées d'un métal liquide, ou d'une matière plastique ou d'une barbotine céramique et **en ce que** la matière excédentaire est de nouveau retirée des cavités creuses (3).

29. Procédé selon la revendication 1,
**caractérisé en ce que**,
après le retrait de la matière des sphères, il se forme deux cavités creuses continues séparées.

30. Procédé selon la revendication 1 ou 29,
**caractérisé en ce que**
des raccords nécessités pour les cavités creuses sont d'ores et déjà pris en considération par le façonnage et sont directement coulés conjointement lors du remplissage des cavités creuses.

31. Procédé selon la revendication 29,
**caractérisé en ce que**
d'éventuelles fuites entre les deux cavités creuses continues ou les deux chambres continues sont fermées par un fluide de scellement.

32. Procédé selon la revendication 1,
**caractérisé en ce que**
le métal liquide, l'alliage métallique liquide, la matière plastique liquide ou la masse céramique liquide contiennent des fibres dont la longueur est choisie de sorte que lors du processus de remplissage, elles s'orientent dans les interstices entre les sphères (3), le long des canaux formés par les interstices (3).

33. Procédé selon la revendication 32,
**caractérisé en ce que**
les fibres ont une longueur de 3 à 4 mm.

34. Procédé selon la revendication 32,
**caractérisé en ce que**
les fibres sont des fibres de carbone, des fibres de verre, des fibres minérales ou des fibres synthétiques.
